(19) Europäisches Patentamt
European Patent Office
Office européen des brevets

(11) **EP 2 784 108 A1**

(12) **EUROPEAN PATENT APPLICATION**
published in accordance with Art. 153(4) EPC

(43) Date of publication:
**01.10.2014 Bulletin 2014/40**

(21) Application number: **12862678.5**

(22) Date of filing: **26.12.2012**

(51) Int Cl.:
$C08J\ 9/28^{(2006.01)}$    $B01D\ 69/08^{(2006.01)}$
$B01D\ 71/34^{(2006.01)}$    $B01D\ 71/36^{(2006.01)}$
$B01D\ 71/38^{(2006.01)}$    $C02F\ 1/44^{(2006.01)}$
$C08F\ 214/26^{(2006.01)}$    $C08F\ 216/06^{(2006.01)}$
$C08L\ 27/16^{(2006.01)}$    $C08L\ 27/18^{(2006.01)}$
$C08L\ 29/04^{(2006.01)}$    $D01F\ 6/00^{(2006.01)}$
$D01F\ 6/32^{(2006.01)}$    $D01F\ 6/34^{(2006.01)}$
$D01F\ 6/48^{(2006.01)}$    $D01F\ 6/50^{(2006.01)}$

(86) International application number:
**PCT/JP2012/083690**

(87) International publication number:
**WO 2013/099966 (04.07.2013 Gazette 2013/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2011 JP 2011289315**

(71) Applicant: **Daikin Industries, Ltd.
Osaka 530-8323 (JP)**

(72) Inventors:
• **SHIOTANI Yuko
Kita-ki
Osaka-shi
Osaka 530-8323 (JP)**

• **TANAKA Yoshito
Kita-ki
Osaka-shi
Osaka 530-8323 (JP)**
• **ITO Kengo
Kita-ki
Osaka-shi
Osaka 530-8323 (JP)**
• **MIKI Jun
Kita-ki
Osaka-shi
Osaka 530-8323 (JP)**

(74) Representative: **HOFFMANN EITLE
Patent- und Rechtsanwälte
Arabellastrasse 4
81925 München (DE)**

(54) **POROUS POLYMER MEMBRANE**

(57) An object of the present invention is to provide porous polymer membranes with good water permeability and good hydrophilicity. The present invention relates to a porous polymer membrane including a copolymer (A) containing vinyl alcohol units and tetrafluoroethylene units, wherein an alternating ratio of the vinyl alcohol units and the tetrafluoroethylene units is at least 30%.

EP 2 784 108 A1

**Description**

TECHNICAL FIELD

The present invention relates to porous polymer membranes.

BACKGROUND ART

Porous membranes have recently been utilized in various fields, including not only for treatment of water (e.g. water purification, wastewater treatment), medical usage (e.g. blood purification), and the food industry, but also for use as charged membranes, battery separators, and fuel cells.

For example, in the field of water treatment (e.g. water purification, wastewater treatment), the use of porous membranes is an alternative to conventional processes including sand filtration and coagulative precipitation, and a means of improving the quality of treated water. Water treatment applications in which a large quantity of water is treated require porous membranes with excellent water permeability. Porous membranes with excellent water permeability reduce the required effective membrane area. This will realize small-scale water purification apparatuses, and reduce equipment costs.

Studies of such porous membranes focus on porous membranes made of vinyl alcohol polymers. For example, Patent Literature 1 discloses fluorine-containing copolymer membranes made of tetrafluoroethylene-vinyl acetate copolymers or tetrafluoroethylene-vinyl acetate copolymers, at least some of acetate groups of which are saponified.

CITATION LIST

- Patent Literature

Patent Literature 1: JP H05-261256 A

SUMMARY OF INVENTION

- Technical Problem

Conventional porous membranes made of vinyl alcohol polymers have insufficient water permeability, and this leaves room for improvement. In order to meet contamination resistance requirements in addition to good water permeability, porous membranes must have hydrophilicity. Porous membranes with high hydrophilicity are less likely to allow contaminants to accumulate on the surface thereof, and likely to allow contaminants thereon to be easily washed away. This brings some benefits for operating costs (e.g. low operating pressure) and some other benefits (e.g. long lifetime).

The present invention provides porous polymer membranes with good water permeability and good hydrophilicity.

- Solution to Problem

The present inventors have found that the use of copolymers containing vinyl alcohol units and tetrafluoroethylene units, wherein an alternating ratio of the vinyl alcohol units and the tetrafluoroethylene units is at least 30% results in porous polymer membranes with remarkably improved water permeability and hydrophilicity.

Specifically, the present invention provides a porous polymer membrane including a copolymer (A) containing vinyl alcohol units and tetrafluoroethylene units, wherein an alternating ratio of the vinyl alcohol units and the tetrafluoroethylene units is at least 30%.

The copolymer (A) preferably has a vinyl alcohol unit-to-tetrafluoroethylene unit ratio (vinyl alcohol units/tetrafluoroethylene units) of (25 to 75)/(75 to 25) on a molar basis.

The porous polymer membrane of the present invention preferably includes a vinylidene fluoride resin in addition to the copolymer (A).

The porous polymer membrane of the present invention is preferably produced by either one or the combination of a non-solvent induced phase separation method and a thermally-induced phase separation method.

The porous polymer membrane of the present invention is preferably a hollow fiber membrane.

The porous polymer membrane of the present invention is preferably for use in treating water.

- Advantageous Effects of Invention

The above-mentioned features contribute to good water permeability and good hydrophilicity of the porous polymer membrane of the present invention.

DESCRIPTION OF EMBODIMENTS

The following illustrates the present invention in detail.

The porous polymer membrane of the present invention includes a copolymer (A) containing vinyl alcohol units (-CH$_2$-CH(OH)-) and tetrafluoroethylene units (-CF$_2$-CF$_2$-), and an alternating ratio of the vinyl alcohol units and the tetrafluoroethylene units is at least 30%. The porous polymer membrane of the present invention has good water permeability and good hydrophilicity, which is attributed to the copolymer containing vinyl alcohol units and tetrafluoroethylene units polymerized alternately at a high percentage.

In general, vinyl alcohol polymers are made by polymerizing vinyl ester monomers, such as vinyl acetate, and saponifying the resulting polymers. Unfortunately, copolymerization of vinyl acetate with, for example, tetrafluoroethylene is very likely to result in copolymers including more chain structures consisting of vinyl acetate units and having less alternating ratio because vinyl acetate is very likely to homopolymerize.

In spite of this, the present inventors succeeded in producing copolymers with a high alternating ratio of vinyl alcohol units and tetrafluoroethylene units by controlling the polymerization conditions as described below. This led to another finding that the use of copolymers with a high alternating ratio provides porous polymer membranes with high water permeability and high hydrophilicity. Thus, the present invention was completed.

The porous polymer membrane of the present invention has not only good permeability to treating liquids (e.g. water), but also good mechanical strength (e.g. tensile strength, elongation properties, bending strength), good chemical resistance, and good alkali resistance, which is attributed to the copolymer (A) contained therein. The porous polymer membrane of the present invention can be configured to separate particles in a wide size range of from approximately 10 nm to several microns by controlling the membrane-forming conditions.

Preferably, an alternating ratio of the vinyl alcohol units and the tetrafluoroethylene units in the copolymer (A) is at least 30% for reasons of improved water permeability. The percentage is more preferably at least 40%, and still more preferably at least 60%. The upper limit of the alternating ratio is 100%, preferably 95%, and more preferably 90%.

In order to determine the alternating ratio of vinyl alcohol and tetrafluoroethylene, the copolymer (A) is measured in a solvent that dissolves the copolymer (A) (e.g. deuterated acetone) by $^1$H-NMR analysis. The following equation gives the alternating ratio based on three-unit structures.

$$\texttt{Alternating ratio (\%) = C/(A+B+C) × 100}$$

A: Number of V units bonded to two V units (e.g. -V-V-V-)
B: Number of V units bonded to a V unit and a T unit (e.g. -V-V-T-)
C: Number of V units bonded to two T units (e.g. -T-V-T-)
(T: tetrafluoroethylene unit, V: vinyl alcohol unit)

The numbers A, B, and C of V units are calculated from the intensity ratios measured for hydrogen atoms linked to backbone tertiary carbons of vinyl alcohol units (-CH$_2$-CH(OH)-) by the $^1$H-NMR analysis.

Alternatively, the alternating ratio is preferably at least 35% and at most 85%, or at least 35% and below 80%. Too high alternating ratio in the copolymer (A) may reduce the solubility of the copolymer (A) in solvents, and contribute to the difficulty in forming porous polymer membranes, and thus, porous membranes with good hydrophilicity and good mechanical strength may not be obtained.

A membrane material having a 95% or higher alternating ratio has good heat resistance.

The copolymer (A) is a copolymer containing vinyl alcohol units and tetrafluoroethylene units (hereinafter, also referred to as "vinyl alcohol/tetrafluoroethylene copolymer").

The vinyl alcohol unit-to-tetrafluoroethylene unit ratio of the vinyl alcohol/tetrafluoroethylene copolymer is preferably (25 to 75)/(75 to 25) on a molar basis. Vinyl alcohol/tetrafluoroethylene copolymers having a vinyl alcohol unit-to-tetrafluoroethylene unit ratio on a molar basis outside this range are likely to have a lower alternating ratio. Too many vinyl alcohol units may result in a porous membrane that allows the component to elute upon contact with hot water, and has insufficient mechanical strength. Too few vinyl alcohol units may result in reduced hydrophilicity and insufficient water permeability. The vinyl alcohol unit-to-tetrafluoroethylene unit ratio of the copolymer (A) is more preferably (33 to 60)/(67 to 40), and still more preferably (38 to 60)/(62 to 40) on a molar basis.

Preferably, the copolymer (A) is a vinyl alcohol/tetrafluoroethylene copolymer essentially consisting of vinyl alcohol units and tetrafluoroethylene units in order to achieve a higher alternating ratio.

The copolymer (A) may further contain other monomer units in amounts that do not affect the effects of the present invention, besides vinyl alcohol units and tetrafluoroethylene units. Examples of other monomer units include vinyl ester monomer units, vinyl ether monomer units, (meth)acrylic monomer units with a poly(ethylene oxide) side chain, vinyl monomer units with a poly(ethylene oxide) side chain, (meth)acrylic monomer units with a long chain hydrocarbon group, vinyl monomer units with a long chain hydrocarbon group, hexafluoropropylene units, chlorotrifluoroethylene units, and perfluoro vinyl ether units. The total amount of other monomer units is preferably 0 to 50 mol%, more preferably 0 to 40 mol%, and still more preferably 0 to 30 mol%.

The copolymer (A) may optionally contain vinyl ester monomer units. The presence of vinyl ester monomer units in the copolymer (A) elevates the glass transition temperature, and therefore results in a porous polymer membrane with better mechanical strength. Additionally, their presence results in a porous polymer membrane with good acid resistance which is less prone to damage by washing or sterilization with an acid. In the case where the copolymer (A) contains vinyl ester monomer units, the copolymer can be produced by a method for producing the porous polymer membrane of the present invention involving saponification of a copolymer containing vinyl ester monomer units and tetrafluoroethylene units, while controlling the degree of saponification. The saponification is described later.

The desired weight average molecular weight of the copolymer (A) depends on the intended use of the porous polymer membrane of the present invention. From the viewpoint of mechanical strength and ease of membrane formation, the weight average molecular weight is preferably not less than 10000, more preferably 30000 to 2000000, and still more preferably 50000 to 1000000. The weight average molecular weight can be determined by gel permeation chromatography (GPC).

The following demonstrates how to produce the copolymer (A). Typically, the copolymer (A) can be produced by copolymerizing a vinyl ester monomer, such as vinyl acetate, and tetrafluoroethylene, and saponifying the resulting copolymer. In order to achieve a 30% or higher alternating ratio in the copolymer (A), the polymerization is preferably carried out under conditions in which the composition ratio between the vinyl ester monomer and tetrafluoroethylene is maintained substantially constant. Specifically, the copolymer (A) is preferably produced by a production method which includes: polymerization to produce a copolymer containing vinyl ester monomer units and tetrafluoroethylene units under conditions in which the composition ratio between the vinyl ester monomer and tetrafluoroethylene is maintained substantially constant; and saponification of the resulting copolymer to produce a copolymer containing vinyl alcohol units and tetrafluoroethylene units.

Typically, since vinyl ester monomers are very likely to homopolymerize, polymerization of a vinyl ester monomer and tetrafluoroethylene is likely to result in formation of more chain structures consisting of vinyl ester monomer units and less alternating ratio of the vinyl ester monomer and tetrafluoroethylene.

Examples of the vinyl ester monomer include vinyl formate, vinyl acetate, vinyl propionate, vinyl butyrate, vinyl isobutyrate, vinyl valerate, vinyl isovalerate, vinyl caproate, vinyl heptylate, vinyl caprylate, vinyl pivalate, vinyl pelargonate, vinyl caprate, vinyl laurate, vinyl myristate, vinyl pentadecanoate, vinyl palmitate, vinyl margarate, vinyl stearate, vinyl octylate, VeoVa-9 (Showa Shell Sekiyu K. K.), VeoVa-10 (Showa Shell Sekiyu K. K.), vinyl benzoate, and vinyl versatate. Among these, preferred are vinyl acetate, vinyl propionate, and vinyl versatate, which are easily available at low cost. Or, a mixture of these may be used.

The copolymerization of the vinyl ester monomer and tetrafluoroethylene can be accomplished by polymerization techniques, such as, but not particularly limited to, solution polymerization, bulk polymerization, emulsion polymerization, and suspension polymerization, and emulsion polymerization or solution polymerization is preferable for ease of industrial-scale production.

In the case of emulsion polymerization or solution polymerization, a polymerization initiator, solvent, chain transfer agent, surfactant, and the like may be used. Known agents may be mentioned as examples of these agents.

Preferred examples of solvents usable for solution polymerization include solvents that dissolve tetrafluoroethylene, the vinyl ester monomer and the copolymer (A), and specifically, mention may be made of, for example, esters, such as butyl acetate, ethyl acetate, methyl acetate, and propyl acetate; ketones, such as acetone, methyl ethyl ketone, and cyclohexanone; aliphatic hydrocarbons, such as hexane, cyclohexane, and octane; aromatic hydrocarbons, such as benzene, toluene, and xylene; alcohols, such as methanol, ethanol, tert-butanol, and isopropanol; cyclic ethers, such as tetrahydrofuran and dioxane; fluorine-containing solvents, such as HCFC-225; dimethyl sulfoxide and dimethylformamide; and mixtures of these.

Examples of solvents usable for emulsion polymerization include water and mixture solvents of water and alcohols.

Examples of polymerization initiators include peroxycarbonates, such as diisopropyl peroxydicarbonate (IPP) and di-n-propyl peroxydicarbonate (NPP); oil-soluble radical polymerization initiators, such as t-butyl peroxypivalate; and water-soluble radical polymerization initiators, such as ammonium salts, potassium salts, and sodium salts of persulfuric acid, perboric acid, perchloric acid, perphosphoric acid, and percarbonic acid. In particular, ammonium persulfate and potassium persulfate are preferable for emulsion polymerization.

Examples of surfactants include known surfactants, and specifically, mention may be made of, for example, nonionic surfactants, anionic surfactants, and cationic surfactants. Other examples include fluorine-containing surfactants.

Examples of chain transfer agents include hydrocarbons, such as ethane, isopentane, n-hexane, and cyclohexane; aromatics, such as toluene and xylene; ketones, such as acetone; acetic acid esters, such as ethyl acetate and butyl acetate; alcohols, such as methanol and ethanol; mercaptans, such as methyl mercaptan; and hydrocarbon halides, such as carbon tetrachloride, chloroform, methylene chloride, and methyl chloride. Depending on the chain transfer constant of a particular compound, typically 0.001 to 10% by mass of chain transfer agent is used based on the amount of the polymerization solvent.

The polymerization temperature is any temperature within a range in which the composition ratio between the vinyl ester monomer and tetrafluoroethylene can be maintained substantially constant. Specifically, the temperature may be 0 to 100°C.

The polymerization pressure is any pressure within a range in which the composition ratio between the vinyl ester monomer and tetrafluoroethylene can be maintained substantially constant. Specifically, the pressure may be 0 to 10 MPaG.

Saponification of acetate groups derived from vinyl acetate is a common process, and can be accomplished by known methods, such as alcoholysis and hydrolysis. The saponification converts acetate groups ($-OCOCH_3$) into hydroxyl groups (-OH). Other vinyl ester monomers can likewise be saponified to have hydroxyl groups by such known methods.

In the case where the porous polymer membrane of the present invention is produced by saponification of a copolymer containing vinyl ester monomer units and tetrafluoroethylene units, the degree of saponification may be any degree within a range in which the water permeability and alkali resistance are not affected. Specifically, the degree of saponification is preferably not lower than 50%, more preferably not lower than 60%, and still more preferably not lower than 70%.

The degree of saponification is calculated by the following equation based on the results of IR analysis or $^1$H-NMR analysis of the copolymer (A).

$$\text{Degree of saponification (\%)} = D/(D+E) \times 100$$

D: Number of vinyl alcohol units in copolymer (A)
E: Number of vinyl ester monomer units in copolymer (A)

The copolymer (A) may be the only resin component in the porous polymer membrane of the present invention, or the porous polymer membrane may include the copolymer (A) and resin(s) other than the copolymer (A).

The porous polymer membrane of the present invention contains the copolymer (A) in an amount of preferably not less than 30% by mass, more preferably not less than 40% by mass of the total amount thereof from the viewpoint of water permeability.

Examples of resins other than the copolymer (A) include thermoplastic resins. The "thermoplastic resin" refers to resins that deform or flow in response to external force when heated. Examples of thermoplastic resins include vinylidene fluoride resin, polyethylene resin, polypropylene resin, acrylic resin, polyacrylonitrile, acrylonitrile-butadiene-styrene (ABS) resin, polystyrene resin, acrylonitrile-styrene (AS) resin, vinyl chloride resin, polyethylene terephthalate, polyamide resin, polyacetal resin, polycarbonate resin, modified polyphenylene ether resin, polyphenylene sulfide resin, polyamideimide resin, polyetherimide resin, polysulfone resin, polyethersulfone resin, and mixtures and copolymers thereof. Any resin miscible with these may be used in combination.

Among these thermoplastic resins, preferred is at least one selected from the group consisting of vinylidene fluoride resin, polyethylene resin, polypropylene resin, and acrylic resin as these resins have high chemical resistance. More preferred is vinylidene fluoride resin.

The "vinylidene fluoride resin" refers to resins made of polyvinylidene fluoride or a copolymer containing vinylidene fluoride units.

Polyvinylidene fluoride having a weight average molecular weight of 50000 to 1000000 is preferable in terms of mechanical strength of the porous polymer membrane and ease of processing.

Examples of copolymers containing vinylidene fluoride units include vinylidene fluoride/tetrafluoroethylene copolymers and vinylidene fluoride/hexafluoropropylene copolymers. In particular, vinylidene fluoride/tetrafluoroethylene copolymers are preferred among the copolymers containing vinylidene fluoride units in terms of mechanical strength and alkali resistance.

In terms of ease of membrane formation and alkali resistance, preferred are vinylidene fluoride/tetrafluoroethylene copolymers having a vinylidene fluoride unit-to-tetrafluoroethylene unit ratio (vinylidene fluoride units/tetrafluoroethylene units) of (50 to 99)/(50 to 1) on a molar basis. Examples of such polymers include NEOFLON VT50, VP50, VT100, VP100, VP101, and VP100X (all available from Daikin Industries, Ltd.). More preferred are vinylidene fluoride/tetrafluoroethylene copolymers having a vinylidene fluoride unit-to-tetrafluoroethylene unit ratio of (50 to 90)/(50 to 10) on a molar basis. The "vinylidene fluoride/tetrafluoroethylene copolymers" are intended to include vinylidene fluoride/tetrafluoroethylene copolymers consisting of vinylidene fluoride units and tetrafluoroethylene units, and ternary copolymers containing, in addition to vinylidene fluoride units and tetrafluoroethylene units, other units, such as hexafluoropropylene units, chlorotrifluoroethylene units, or perfluorovinylether units, in an amount that does not affect the features of the present invention.

The desired weight average molecular weight of such copolymers containing vinylidene fluoride units depends on the intended use of the porous polymer membrane of the present invention. From the viewpoint of mechanical strength and ease of membrane formation, the weight average molecular weight is preferably not less than 10000, more preferably 50000 to 1000000, and still more preferably 100000 to 800000. The weight average molecular weight can be determined by gel permeation chromatography (GPC).

The "polyethylene resin" refers to resins containing an ethylene homopolymer or an ethylene copolymer. Polyethylene resins containing two or more ethylene copolymers are also included within the scope of this term. Examples of ethylene copolymers include copolymers of ethylene with at least one selected from linear unsaturated hydrocarbons, such as propylene, butene, and pentene.

The "polypropylene resin" refers to resins containing a propylene homopolymer or propylene copolymer. Polypropylene resins containing two or more propylene copolymers are also included within the scope of this term. Examples of propylene copolymers include copolymers of propylene with at least one selected from linear unsaturated hydrocarbons, such as ethylene, butene, and pentene.

The "acrylic resin" refers to polymer compounds mainly containing a polymer of acrylic acid, methacrylic acid, a derivative of these (e.g. acrylamide, acrylonitrile), or the like. In particular, acrylic ester resins and methacrylic ester resins are preferable.

In the case where the porous polymer membrane of the present invention contains the copolymer (A) and a resin other than the copolymer (A), the membrane strength, water permeability, filtering performance, and other properties of the porous polymer membrane can be controlled by modulating the type and amount of the resin other than the copolymer (A). In particular, the use of a vinylidene fluoride copolymer as the resin other than the copolymer (A) results in a porous polymer membrane with high mechanical strength and high alkali resistance as well as good water permeability.

The porous polymer membrane of the present invention may further contain additives, such as polyvinylpyrrolidone, poly(methyl methacrylate) resin, poly(ethylene oxide), montmorillonite, $SiO_2$, $CaCO_3$, and polytetrafluoroethylene, from the viewpoint of hydrophilization, phase separation control, and improvement in mechanical strength. The porous polymer membrane of the present invention may be alkali treated for reasons of improved water permeability. The "alkali" refers to, for example, aqueous solutions of NaOH, aqueous solutions of KOH, aqueous ammonia, and amine solutions. These solutions may contain, but not limited to, an alcohol (e.g. ethanol, methanol), or an organic solvent. In particular, an alcohol is preferably contained.

The porous polymer membrane of the present invention has a pore size of preferably 2 nm to 1.0 $\mu$m, more preferably 5 nm to 0.5 $\mu$m. Too small a pore size may lead to insufficient gas or liquid permeability. Too large a pore size may lead to low filtering performance, and may also lead to low mechanical strength, and in turn, to a high damage frequency.

The pore size is determined by taking a photograph of a surface of the porous polymer membrane with, for example, SEM at a magnification allowing clear observation of fine pores and measuring the size of the fine pores. For elliptical pores, the size is determined by the formula: $(a \times b)^{0.5}$, where a and b are the lengths of the minor and major axes. An approximate pore size can be determined from the particle filtering rate. For example, a porous membrane which filters 95% or more of 50-nm polystyrene particles is estimated to have a pore size of 50 nm or smaller.

In the case where the porous polymer membrane of the present invention is capable of filtering 95% or more of 50-nm particles, its pure water permeability coefficient is preferably not lower than $1.0 \times 10^{-9}$ $m^3/m^2/Pa/s$, and more preferably not lower than $2.0 \times 10^{-9}$ $m^3/m^2/Pa/s$. The upper limit of the pure water permeability coefficient is not limited. The higher the value, the better, as long as the desired levels of filtering performance and strength are ensured.

The pure water permeability coefficient is determined by allowing deionized water optionally pressurized to 0.01 MPa or higher with a pump or nitrogen to pass through a hollow fiber membrane product or flat membrane product at 25°C. Concretely, the following expression gives the pure water permeability coefficient.

$$\text{Pure water permeability coefficient } [m^3/m^2/Pa/s] = \text{(Amount of filtered water)/(Membrane area)/(Passing time)/(Evaluation pressure)}$$

The porous polymer membrane of the present invention has a 100-nm or 50-nm particle filtration rate of preferably not less than 90%, more preferably not less than 95%.

The particle filtration rate is determined by diluting particle size-controlled polystyrene latex particles in deionized water to approximately 100 ppm, and passing the resulting dispersion (original liquid for evaluation) through a membrane. The following equation gives the particle filtration rate.

$$\text{Particle filtration rate (\%)} = \text{((Absorbance of original liquid for evaluation)-(Absorbance of filtered liquid))/(Absorbance of original liquid for evaluation)} \times 100$$

The porous polymer membrane of the present invention has a maximum point breaking strength of preferably not lower than 1.0 MPa, more preferably not lower than 2.0 MPa from the viewpoint of mechanical strength.

The maximum point breaking strength is determined by measuring the breaking strength of a sample piece chucked with a chuck-to-chuck distance of 50 mm at a pulling speed of 200 mm/min., and is expressed per unit measurement area based on the sectional area of the sample piece before the tensile test.

The porous polymer membrane of the present invention has a maximum point elongation of preferably not less than 90%, more preferably not less than 200% from the viewpoint of mechanical strength.

The maximum point elongation is determined by measuring the breaking strength of a sample piece chucked with a chuck-to-chuck distance of 50 mm at a pulling speed of 200 mm/min., and calculating the percent elongation from the maximum length based on the chuck-to-chuck distance of 50 mm.

The porous polymer membrane of the present invention may be in any form. For example, the membrane may be in the form of a three-dimensional network structure in which the solid components spread out three-dimensionally in a net form, or may be in the form of a spherical structure in which many spherical or substantially spherical solid components are combined to each other directly or through streak solid components. The membrane may have both of these structures simultaneously.

The porous polymer membrane of the present invention is preferably a flat membrane or hollow fiber membrane.

In the case of a flat membrane form, the porous polymer membrane of the present invention may be in the form of a composite membrane including a fluoropolymer layer made of the copolymer (A) and a porous base material. Such a composite membrane may include a porous base material enclosed by a fluoropolymer layer made of the copolymer (A), or a laminate of a porous base material and a fluoropolymer layer made of the copolymer (A). Alternatively, the porous polymer membrane may be in the form of a composite membrane including such a porous base material, such a fluoropolymer layer, and a resin layer made of a resin other than the copolymer (A). Examples of resins usable for such a resin layer include those mentioned above as thermoplastic resins.

Examples of such a porous base material include woven fabrics, knitted fabrics, and nonwoven fabrics made of organic fibers, such as polyester fibers, nylon fibers, polyurethane fibers, acrylic fibers, rayon fibers, cotton, or silk. Other examples include woven fabrics, knitted fabrics, and nonwoven fabrics made of inorganic fibers, such as glass fibers or metal fibers. From the viewpoint of flexibility and cost, porous base materials made of organic fibers are preferable.

The size of pores in the surface of the porous base material may be determined as desired in consideration of the intended use of the membrane; however, it is preferably 5 nm to 1.0 $\mu$m, and more preferably 8 nm to 0.5 $\mu$m.

In the case of a flat membrane form, the porous polymer membrane preferably has a thickness of 10 $\mu$m to 1 mm, more preferably 30 $\mu$m to 500 $\mu$m. In the case of a complex membrane form including a porous base material, the thickness including the porous base material is preferably within the above-mentioned ranges.

The porous polymer membrane of the present invention is more preferably a hollow fiber membrane from the viewpoint of the amount of water to be treated per area or per volume.

In the case of a hollow fiber membrane form, the porous polymer membrane has an inner diameter of preferably 100 $\mu$m to 10 mm, more preferably 150 $\mu$m to 8 mm, and an outer diameter of preferably 120 $\mu$m to 15 mm, more preferably 200 $\mu$m to 12 mm.

The porous polymer membrane has a thickness of preferably 20 $\mu$m to 3 mm, more preferably 50 $\mu$m to 2 mm.

The size of pores in the inner and outer surfaces of the hollow fiber membrane may be determined as desired in consideration of the intended use of the membrane; however, the size is preferably in a range of 2 nm to 1.0 $\mu$m, and more preferably 5 nm to 0.5 $\mu$m.

The porous polymer membrane of the present invention can be produced by any of various methods. Examples of the methods include phase separation, melt extraction, steam coagulation, stretching, etching, a method of sintering a polymer sheet into a porous membrane, a method of crushing a cellular polymer sheet into a porous membrane, and a method using an electrospinning technique.

The melt extraction is a technique for producing a porous structure in which inorganic particles and an organic liquid are melt-mixed with a particular mixture; the mixture is molded with a press machine or by extruding it through a die at a temperature not lower than the melting point of the copolymer (A), followed by cooling solidification; and then the organic liquid and inorganic particles are extracted.

The steam coagulation is a technique in which a thin film is formed from a fluoropolymer solution containing the copolymer (A) dissolved in a good solvent, and at least one surface of the thin film is forcedly supplied with steam containing saturated steam or mist of a poor solvent which is compatible with the good solvent and does not dissolve the copolymer (A).

The porous polymer membrane of the present invention is preferably produced by phase separation because this technique allows for easy control of the size of pores. Examples of phase separation methods include a thermally induced phase separation (TIPS) method and a non-solvent induced phase separation (NIPS) method.

Since the non-solvent induced phase separation method is relatively likely to form a three-dimensional network structure, porous membranes produced by this method have good mechanical strength. This method can also be used to produce asymmetric membranes. On the other hand, since the thermally induced phase separation method is relatively likely to form spherical structures, porous membranes produced by this method tend to have good water permeability. Additionally, this method allows a higher level of mechanical strength to be achieved by using a polymer solution with a higher concentration for membrane formation. These features are preferably taken into consideration in selecting the method of forming membranes.

In the case of the thermally induced phase separation method, the porous polymer membrane of the present invention can be produced by a production method including the steps of: dissolving of the copolymer (A) in a poor solvent or good solvent at a relatively high temperature, thereby providing a fluoropolymer solution; and cooling solidification of the fluoropolymer solution.

The fluoropolymer solution of the copolymer (A) dissolved in a solvent is a single-phase homogeneous liquid at temperatures higher than the cloud point. At temperatures not higher than the cloud point, the solution is phase separated into two phases, a polymer-rich phase and a solvent-rich phase. At temperatures not higher than the crystallization temperature, the polymer matrix is immobilized to form a porous membrane.

In the thermally induced phase separation method, the fluoropolymer solution contains the copolymer (A) in an amount of preferably 10 to 60% by mass, more preferably 15 to 50% by mass of the total amount of the copolymer (A) and the solvent.

The viscosity of the fluoropolymer solution can be adjusted in a proper range by controlling the fluoropolymer concentration in a proper range. Some fluoropolymer solutions having a viscosity outside a proper range cannot be formed into a porous polymer membrane.

The "poor solvent" refers to a solvent that does not dissolve 5% by mass or more of the copolymer (A) at temperatures below 60°C but dissolves 5% by mass or more of the copolymer at temperatures not lower than 60°C but not higher than the melting point of the resin. In contrast, the "good solvent" refers to a solvent that dissolves 5% by mass or more of the resin even at temperatures below 60°C. The term "non-solvent" is used to mean a solvent that does not dissolve or swell the resin until the temperature reaches the melting point of the resin or the boiling point of this liquid.

Examples of poor solvents include alkyl ketones, esters, glycol esters, and organic carbonates having a medium chain length, such as cyclohexanone, isophorone, $\gamma$-butyrolactone, methyl isoamyl ketone, dimethyl phthalate, diethyl phthalate, ethanol, propanol, aliphatic polyalcohols, propylene glycol methyl ether, propylene carbonate, diacetone alcohol, and glycerol triacetate; and mixed solvents thereof. Other examples include fluorosolvents (e.g. HFC-365), diphenyl carbonate, methyl benzoate, diethyleneglycolethylacetate, and benzophenone. Mixtures of a non-solvent and a poor solvent are considered as poor solvents when the mixtures satisfy the above definition of poor solvents.

In the thermally induced phase separation method, the solvent for the fluoropolymer solution is preferably, but not limited to, a poor solvent. A good solvent may be used in consideration of the phase separation behavior of the fluoropolymer.

Examples of good solvents include fluorosolvents (e.g. HCFC-225), lower alkylketones (e.g. N-methyl-2-pyrrolidone, dimethyl sulfoxide, dimethylacetamide, dimethylformamide, methyl ethyl ketone, acetone, methanol, tetrahydrofuran, tetramethylurea, trimethyl phosphate), esters, amides, and mixed solvents thereof.

Examples of non-solvents include water; aliphatic hydrocarbons, aromatic hydrocarbons, aromatic polyhydric alcohols, and chlorinated hydrocarbons, such as hexane, pentane, benzene, toluene, carbon tetrachloride, o-dichlorobenzene, trichloroethylene, ethylene glycol, diethylene glycol, triethylene glycol, propylene glycol, butylene glycol, pentanediol, hexanediol, and low-molecular-weight polyethylene glycols; other chlorinated organic liquids; and mixed solvents thereof.

In the thermally induced phase separation method, the fluoropolymer solution is prepared by dissolving the copolymer (A) in a poor solvent or good solvent preferably at a temperature of 20 to 220°C, and more preferably at a temperature of 30 to 200°C. At relatively high temperatures, the copolymer (A) can be dissolved to a higher concentration, and this allows for production of a porous polymer membrane with high mechanical strength. Too high a copolymer (A) concentration may result in a porous polymer membrane with a low void rate, and such a membrane may have low water permeability. If the fluoropolymer solution thus prepared has a viscosity outside a proper range, a porous polymer membrane cannot be formed therefrom.

The cooling solidification of the fluoropolymer solution is preferably accomplished, for example, by extruding the fluoropolymer solution through a die into a cooling bath. In the case of a flat porous polymer membrane form, a method involving solution casting and immersion in a cooling bath is mentioned as another preferable example.

Cooling liquids usable for such a cooling bath should have a temperature lower than that of the fluoropolymer solution. For example, liquids containing 60 to 100% by mass of a poor solvent or good solvent and having a temperature of 5 to 80°C may be used. A non-solvent or a non-solvent containing a poor solvent or good solvent may be used as a cooling liquid.

The concentration of the fluoropolymer solution, the composition of the solvent for dissolving the fluoropolymer, and the composition of the cooling liquid for the cooling bath are important in this method for producing the porous polymer membrane of the present invention. These factors can be adjusted to control the porous structure of the porous polymer membrane.

For example, a porous polymer membrane with different surface structures can be formed by using fluoropolymer solutions with different compositions and/or cooling liquids with different compositions for the respective surfaces of the porous polymer membrane.

In the case of the non-solvent induced phase separation method, the porous polymer membrane of the present invention can be produced, for example, by a production method including the steps of: preparing a fluoropolymer solution by dissolving the copolymer (A) in a solvent; and extruding the fluoropolymer solution through a die into a solidifying bath containing a non-solvent.

The immersion of the fluoropolymer solution in a solidifying bath containing a non-solvent results in non-solvent-induced phase separation due to the solvent/non-solvent concentration gradient between the fluoropolymer solution and the solidifying bath. Thus, this method forms a dense skin layer on an outer surface where phase separation occurs first as a result of the solvent/non-solvent exchange. The phase separation proceeds with time to the inside of the membrane. This allows for production of an asymmetric membrane in which the pore size continuously increases from the skin layer towards the inside of the membrane.

In the non-solvent induced phase separation method, the fluoropolymer solution preferably contains the copolymer (A) and a solvent. In another preferable embodiment of the present invention, the fluoropolymer solution contains a non-solvent besides the copolymer (A) and the solvent.

The fluoropolymer solution contains the copolymer (A) in an amount of preferably 5 to 40% by mass, more preferably 10 to 35% by mass of the total amount of the copolymer (A), the solvent, and the non-solvent (the total amount of the copolymer (A) and the solvent in the case where the fluoropolymer solution does not contain any non-solvent).

The fluoropolymer solution contains the non-solvent in an amount of preferably 0.1 to 10% by mass, more preferably 0.5 to 8% by mass of the total amount of the copolymer (A), the solvent, and the non-solvent.

The viscosity of the fluoropolymer solution can be adjusted in a proper range by controlling the fluoropolymer concentration in a proper range. Some fluoropolymer solutions having a viscosity outside a proper range cannot be formed into a porous polymer membrane.

The fluoropolymer solution may be at ambient temperature or may be heated. For example, the temperature is preferably 10 to 35°C.

In the non-solvent induced phase separation method, the same solvents as those listed for the thermally induced phase separation method may be used. Any of poor solvents and good solvents can be used, but a good solvent is preferable.

The same non-solvents as those listed for the thermally induced phase separation method may be used.

Preferable examples of solidifying liquids usable for the solidifying bath include liquids containing a non-solvent. Such liquids may contain a poor solvent or good solvent as well. As examples of non-solvents, mention may be made of the same non-solvents listed for the thermally induced phase separation method. For example, water is preferably used.

The porous polymer membrane of the present invention may be produced by the combination of the thermally induced phase separation method and the non-solvent induced phase separation method.

Both the non-solvent induced phase separation method and the thermally induced phase separation method involve extruding a fluoropolymer solution of the copolymer (A) dissolved in a solvent through a die, and solidifying the extruded solution into a porous polymer membrane. Examples of the die include a slit die, a double co-extrusion head, and a triple co-extrusion head.

In the case of a hollow fiber membrane form, a double co-extrusion head or triple co-extrusion head for spinning hollow fiber membranes is preferably used to produce the porous polymer membrane, for example.

In the case of a double co-extrusion head, a hollow fiber membrane can be produced as follows: the fluoropolymer solution is extruded from the outer tube of the double co-extrusion head while ejecting a fluid for forming a hollow core, such as deionized water, from the inner tube, followed by solidification in a solidifying bath or cooling bath.

The fluid for forming a hollow core is typically a gas or liquid. A liquid containing a poor solvent or good solvent at a concentration of 60 to 100%, which is similar to the cooling liquid, is preferably used in the thermally induced phase separation method. Or, a non-solvent or non-solvent containing a poor solvent or good solvent may be used. In the non-solvent induced phase separation method, the aforementioned non-solvents are preferably used as the fluid for forming a hollow core, and specifically, water, such as deionized water, is preferable. These non-solvents may contain a poor solvent or good solvent.

When the fluid for forming a hollow core and the cooling or solidifying liquid have a different composition, a hollow fiber membrane with two different structures can be produced. The fluid for forming a hollow core may be cooled before use. In the case where the cooling bath can sufficiently cool and solidify the solution into a hollow fiber membrane, the fluid may be supplied without precooling.

A triple co-extrusion head is preferably used when two kinds of resin solutions are used. For example, two kinds of solutions of the fluoropolymer are extruded from the outer tube and the middle tube of a triple co-extrusion head while the liquid for forming a hollow core is extruded from the inner tube, and the extruded solutions are solidified in a solidifying bath or cooling bath into a hollow fiber membrane. Another example is that the fluoropolymer solution and a resin solution containing a resin other than the copolymer (A) are extruded from the outer tube and the middle tube, respectively, of a triple co-extrusion head while the fluid for forming a hollow core is extruded from the inner tube, and the extruded solutions are solidified in a solidifying bath or cooling bath into a hollow fiber membrane.

Examples of the resin other than the copolymer (A) include the resins exemplified above. In particular, the above-mentioned thermoplastic resins are preferable, and vinylidene fluoride resin and acrylic resin are more preferable.

Formation of a hollow fiber membrane using a double or triple co-extrusion head as described above is advantageous in terms of reducing the amount of the solidifying liquid or cooling liquid, as compared with formation of a flat membrane.

In the case of a hollow fiber membrane form, the porous polymer membrane of the present invention may include a hollow fiber membrane produced in such a manner as described above, and an additional layer made of the fluoropolymer or a resin other than the copolymer (A) on the outer or inner surface of the membrane.

Such a layer of the fluoropolymer or another resin can be formed by applying a solution of the fluoropolymer or a solution of the resin to the outer surface or inner surface of the hollow fiber membrane. The application of a fluoropolymer solution or a resin solution to the outer surface of the hollow fiber membrane is accomplished preferably by immersing the hollow fiber membrane in either of the solutions or dropping either of the solutions onto the hollow fiber membrane. The application of a solution to the inner surface of the hollow fiber membrane is preferably accomplished by feeding the solution into the hollow fiber membrane.

The amount of the solution to be deposited can be controlled by applying a controlled amount of the solution. Alternatively, after the porous membrane is immersed into the solution or the solution is applied to the porous membrane, a part of the deposited solution may be scratched off or blown off with an air knife, for example.

In the case of a flat membrane form, the porous polymer membrane of the present invention can be produced by casting a solution of the fluoropolymer, followed by immersion in a cooling bath or solidifying bath. Alternatively, the fluoropolymer solution may be extruded through a slit die into a cooling bath or solidifying bath.

In the case of a composite membrane form including a porous base material, the porous polymer membrane of the present invention may be produced by immersing the porous base material into a solution of the fluoropolymer, or applying a solution of the fluoropolymer to at least one surface of the porous base material.

The above-mentioned production methods provide porous polymer membranes with good water permeability. If porous membranes produced by these production methods have insufficient water permeability, they may be further stretched to obtain the porous polymer membrane of the present invention.

The pore size of the porous polymer membrane of the present invention can be controlled, for example, by adding an additive for controlling the pore size to the fluoropolymer solution, and then eluting the additive during or after formation of a porous structure of the copolymer (A). The additive may remain in the porous polymer membrane, if necessary.

In both cases of the non-solvent induced phase separation method and the thermally induced phase separation method, the fluoropolymer solution may contain an additive. The pore size of the porous polymer membrane can be controlled by eluting the additive after formation of a porous structure. The additive may remain in the porous polymer membrane, if necessary.

Examples of such additives include organic compounds and inorganic compounds. Preferable examples of organic compounds include compounds that are soluble or homogeneously dispersed in the solvent contained in the fluoropolymer solution. In the non-solvent induced phase separation method, an organic compound soluble in the non-solvent contained in the solidifying liquid is preferably used. In the thermally induced phase separation method, an organic compound soluble in the solvent contained in the cooling liquid is preferably used.

Examples of such organic compounds include water-soluble polymers, surfactants, glycerin, and saccharides, such as polyvinyl pyrrolidone, polyethylene glycol, polyvinyl alcohol, polyethylene imine, polyacrylic acid, and dextran.

Preferable examples of inorganic compounds include water-soluble compounds, such as calcium chloride, lithium chloride, and barium sulfate.

Alternatively, the average size of surface pores can be controlled without using an additive by modulating the type, concentration, and temperature of the non-solvent in the solidifying liquid so as to control the phase separation speed. Generally, a high phase separation speed results in surface pores with a small average size, and a low phase separation speed results in surface pores with a large average size. Also, addition of a non-solvent to the fluoropolymer solution is effective in controlling the phase separation speed.

From the viewpoint of hydrophilization, phase separation control, and improvement in mechanical strength, the fluoropolymer solution may further contain additives, such as polyvinyl pyrrolidone, poly(methyl methacrylate) resin, montmorillonite, $SiO_2$, $CaCO_3$, and polytetrafluoroethylene.

The porous polymer membrane of the present invention is suitably used as a microfiltration membrane or ultrafiltration membrane for treating water in production of drinking water, water purification treatment, and wastewater treatment. In the field of ultra-pure water production, the porous polymer membrane of the present invention may be used as a charged porous membrane which increases ion filtering performance to provide pure water with a higher purity. Because of its high permeability and good chemical resistance, the porous polymer membrane of the present invention is preferably used as a porous polymer membrane for treating water.

Moreover, the porous polymer membrane of the present invention is favorably used in such fields as the medical, food, and battery fields.

In the medical field, the porous polymer membrane of the present invention can be used as a blood purification membrane for removing waste in blood under extracorporeal circulation to purify blood, more specifically, to carry out the functions of the kidneys (e.g. blood dialysis, blood filtration, and blood diafiltration).

In the food field, the porous polymer membrane of the present invention can be used for separation and removal of yeasts after fermentation, or for enrichment of liquids.

In the battery field, the porous polymer membrane of the present invention can be used as a separator for batteries which allows an electrolyte to pass therethrough but retains battery reaction products, and as a base material for polymer solid electrolytes.

EXAMPLES

The present invention is described in more detail by, but not limited to, examples below.

(Alternating ratio)

In order to determine the alternating ratio of vinyl alcohol and tetrafluoroethylene, the copolymer was measured in a deuterated acetone solvent by $^1$H-NMR analysis (deuterated acetone solvent). The following equation gives the alternating ratio based on three-unit structures.

$$\text{Alternating ratio (\%)} = C/(A+B+C) \times 100$$

A: Number of V units bonded to two V units (e.g. -V-V-V-)
B: Number of V units bonded to a V unit and a T unit (e.g. -V-V-T-)
C: Number of V units bonded to two T units (e.g. -T-V-T-)
(T: tetrafluoroethylene unit, V: vinyl alcohol unit)

The numbers A, B, and C of V units were calculated from the intensity ratios measured for hydrogen atoms linked to backbone tertiary carbons of vinyl alcohol units (-$CH_2$-CH(OH)-) by the $^1$H-NMR analysis.

(Analysis by NMR (nuclear magnetic resonance))

JNM-EX270 (JEOL, 270 MHz) was used for the $^1$H-NMR (nuclear magnetic resonance) analysis. The solvent used was deuterated acetone.

(Pure water permeability coefficient)

The pure water permeability coefficient was determined by allowing deionized water optionally pressurized to 0.01 MPa or higher with a pump or nitrogen to pass through a hollow fiber membrane product or flat membrane product at 25°C.

$$\text{Pure water permeability coefficient } [m^3/m^2/Pa/s] = \frac{(\text{Amount of filtered water})}{(\text{Membrane area})/(\text{Passing time})/(\text{Evaluation pressure})}$$

(Particle filtration rate)

The particle filtration rate was determined by diluting particle size-controlled polystyrene latex particles in deionized water to approximately 100 ppm, and passing the resulting dispersion (original liquid for evaluation) through a membrane. The following equation gives the particle filtration rate.

$$\text{Particle filtration rate } (\%) = \frac{((\text{Absorbance of original liquid for evaluation}) - (\text{Absorbance of filtered liquid}))}{(\text{Absorbance of original liquid for evaluation})} \times 100$$

(Maximum point breaking strength)

The maximum point breaking strength was determined by measuring the breaking strength of a sample piece chucked with a chuck-to-chuck distance of 50 mm at a pulling speed of 200 mm/min., and expressed per unit measurement area based on the sectional area of the sample piece before the tensile test.

(Maximum point elongation)

The maximum point elongation was determined by measuring the breaking strength of a sample piece chucked with a chuck-to-chuck distance of 50 mm at a pulling speed of 200 mm/min., and calculating the percent elongation from the maximum length based on the chuck-to-chuck distance of 50 mm.

(Condition of alkali treatment)

An alkali treatment was performed by immersing hollow fibers in a 1 N solution of NaOH in ethanol/water (50/50 volume%).

(Contact angle)

The contact angle (at 25°C) was measured using DropMaster701 (Kyowa Interface Science Co., Ltd.) and pure water as a measurement solvent.

[Example 1]

(Synthesis of vinyl acetate/tetrafluoroethylene copolymer)

Into a 3-L stainless steel autoclave, pure water (1000 g), vinyl acetate (23.2 g), NEOCOL P (a 76.4% by mass solution of dioctyl sodium sulfosuccinate in isopropyl alcohol, Dai-ichi Kogyo Seiyaku Co., Ltd.) were charged, and the inside was purged with nitrogen. Tetrafluoroethylene (37 g) was then added, and the inside was heated to 80°C. Thereafter, tetrafluoroethylene (30 g) was added. The pressure of the inside of the tank reached 0.809 MPa at this time. To this was added with stirring a 1% by mass aqueous solution (22 g) of ammonium persulfate (APS) to initiate the reaction. At the start of the reaction, addition of vinyl acetate was also started. Finally, 283 g of vinyl acetate was added over 6 hours. During the reaction, tetrafluoroethylene was continuously supplied through a solenoid valve to maintain the vinyl acetate/tetrafluoroethylene ratio constant. The stirring was maintained at 500 rpm.

Vinyl acetate was added according to consumption of tetrafluoroethylene while the supply of tetrafluoroethylene and the pressure were controlled specifically by following the cycles: the valve was automatically opened to supply tetrafluoroethylene when the pressure in the tank reached 0.800 MPa as tetrafluoroethylene was consumed; and the valve was automatically closed to stop the supply of tetrafluoroethylene when the pressure in the tank reached 0.775 MPa.

The supply of tetrafluoroethylene and vinyl acetate was stopped at hour 6 after the start of the reaction. The polymerization was allowed to proceed for 1 hour before being stopped by recovering the inside of the tank to ambient temperature and ambient pressure. In this manner, an emulsion of vinyl acetate/tetrafluoroethylene copolymer (1661 g, solids content: 38.5% by mass) was obtained.

The resulting vinyl acetate/tetrafluoroethylene copolymer had a glass transition temperature of 40°C, and a particle size of 116 nm. Elemental analysis of fluorine revealed that the vinyl acetate/tetrafluoroethylene ratio of the copolymer was 49/51 (on a molar basis).

(Hydrolysis: synthesis of vinyl alcohol/tetrafluoroethylene copolymer)

The vinyl acetate/tetrafluoroethylene copolymer (vinyl acetate/tetrafluoroethylene = 49/51 (on a molar basis), 22.5 g) was dissolved in tetrahydrofuran (150 ml). To this solution, a 26% by mass solution of NaOH (water/methanol = 50/50 (% by mass), 8 g) was added, and stirred. The reaction solution was analyzed by IR to track the hydrolysis reaction. When the hydrolysis progressed 100%, the solution was concentrated, reprecipitated, washed, and dried to afford a substantially quantitative yield of a vinyl alcohol/tetrafluoroethylene copolymer. The alternating ratio was 62%.

A polymer solution containing 11.5% by mass of the vinyl alcohol/tetrafluoroethylene copolymer (vinyl alcohol/tetrafluoroethylene = 49/51 (on a molar basis), alternating ratio = 62%, saponification degree = 100%), 9.0% by mass of a vinylidene fluoride/tetrafluoroethylene copolymer (vinylidene fluoride/tetrafluoroethylene = 80/20 (mol%)), 1.5% by mass of polyethylene oxide (PEG600), and 78.0% by mass of dimethylacetamide was obtained by mixing the components at 25°C. The polymer solution was extruded from a double co-extrusion head together with deionized water serving as a fluid for a core, and solidified in deionized water to give a hollow fiber membrane. The resulting hollow fiber membrane had an outer diameter of 0.84 mm, and an inner diameter of 0.73 mm. The pure water permeability coefficient at 25°C was $4.4 \times 10^{-9}$ [m$^3$/m$^2$/Pa/s], and the 50-nm polystyrene particle filtration rate was not lower than 98%. This hollow fiber membrane was estimated to have a pore diameter of not more than 50 nm. The maximum point breaking strength was 4.3 MPa, and the maximum point elongation was 270%.

[Comparative Example 1]

A polymer solution containing 18.0% by mass of a vinylidene fluoride/tetrafluoroethylene copolymer (vinylidene fluoride/tetrafluoroethylene = 80/20 (mol%)), 3.0% by mass of polyethylene oxide (PEG600), and 79.0% by mass of dimethylacetamide was obtained by mixing the components at 25°C. The polymer solution was extruded from a double co-extrusion head together with deionized water serving as a fluid for a core, and solidified in deionized water to give a hollow fiber membrane. The resulting hollow fiber membrane had an outer diameter of 0.91 mm, and an inner diameter of 0.80 mm. This membrane did not allow pure water to pass therethrough at 25°C even though the water was pressurized to 0.1 MPaG. The maximum point breaking strength was 4.7 MPa, and the maximum point elongation was 590%.

[Example 2]

(Synthesis of vinyl acetate/tetrafluoroethylene copolymer)

Perbutyl PV (catalyst, 7.2 g) was added to a butyl acetate solvent (1200 g) and monomeric vinyl acetate (140 g) in a 3-L stainless steel autoclave, and a flange was sealed to create a vacuum in the autoclave. Tetrafluoroethylene (200 g) was charged, and the inside of the tank was heated to 60°C with stirring at 200 rpm to initiate the reaction. Consumption of the monomer gas was confirmed by the decreasing polymerization pressure. At hour 6, the stirring was stopped, and the remaining gas was blown down to terminate the reaction.

After the reaction, the polymer solution was reprecipiated in a large amount of a methanol solution in order to purify the polymer. This gave a vinyl acetate/tetrafluoroethylene copolymer.

Elemental analysis of fluorine revealed that the vinyl acetate/tetrafluoroethylene ratio of the copolymer was 43/57 (on a molar basis).

(Hydrolysis: synthesis of vinyl alcohol/tetrafluoroethylene copolymer)

The vinyl acetate/tetrafluoroethylene copolymer (vinyl acetate/tetrafluoroethylene = 43/57 (molar basis), 20.0 g) was dissolved in tetrahydrofuran (150 ml). To this solution, a 26% by mass solution of NaOH (water/methanol = 50/50 (% by mass), 8 g) was added, and stirred. The reaction solution was analyzed by IR to track the hydrolysis reaction. When the hydrolysis progressed 100%, the solution was concentrated, reprecipitated, washed, and dried to afford a substantially quantitative yield of a vinyl alcohol/tetrafluoroethylene copolymer. The alternating ratio was 40%.

A polymer solution containing 11.5% by mass of the vinyl alcohol/tetrafluoroethylene copolymer (vinyl alcohol/tetrafluoroethylene = 43/57 (on a molar basis), alternating ratio = 40%, saponification degree = 100%), 11.5% by mass of a vinylidene fluoride/tetrafluoroethylene copolymer (vinylidene fluoride/tetrafluoroethylene = 80/20 (mol%)), and 78.0% by mass of dimethylacetamide was obtained by mixing the components at 25°C. The polymer solution was extruded from a double co-extrusion head together with deionized water serving as a fluid for a core, and solidified in deionized water to give a hollow fiber membrane. The resulting hollow fiber membrane had an outer diameter of 0.73 mm, and an inner diameter of 0.61 mm. The pure water permeability coefficient at 25°C was $3.1 \times 10^{-9}$ [m$^3$/m$^2$/Pa/s], and the 50-nm polystyrene particle filtration rate was 95%. The hollow fiber membrane was estimated to have a pore diameter of not more than 50 nm. The maximum point breaking strength was 4.6 MPa, and the maximum point elongation was 95%.

[Comparative Example 2]

A polymer solution containing 18.0% by mass of a vinylidene fluoride/tetrafluoroethylene copolymer (vinylidene fluoride/tetrafluoroethylene = 80/20 (mol%)) and 82.0% by mass of dimethylacetamide was obtained by mixing the components at 25°C. The polymer solution was extruded from a double co-extrusion head together with deionized water serving as a fluid for a core, and solidified in deionized water to give a hollow fiber membrane. The resulting hollow fiber membrane had an outer diameter of 0.92 mm, and an inner diameter of 0.84 mm. This membrane did not allow pure water to pass therethrough at 25°C even though the water was pressurized to 0.1 MPaG. The maximum point breaking strength was 8.0 MPa, and the maximum point elongation was 740%.

[Example 3]

A polymer solution containing 18.0% by mass of the vinyl alcohol/tetrafluoroethylene copolymer (the same copolymer as that obtained in Example 1) and 82.0% by mass of dimethylacetamide was obtained by mixing the components at 25°C. This polymer solution was applied to a polyester nonwoven fabric (Unitika Ltd., 20557FLV) with an applicator (into a thickness of 203 $\mu$m), and immediately immersed in a water coagulation bath at 25°C for 5 minutes, and then in hot water at 92°C for 2 minutes to give a flat porous membrane. The pure water permeability coefficient at 25°C was $4.9 \times 10^{-6}$ [m$^3$/m$^2$/Pa/s], and the contact angle (water) of the membrane was 88°.

[Comparative Example 3]

(Synthesis of vinyl stearate/tetrafluoroethylene copolymer)

Perbutyl PV (catalyst, 0.4 g) was added to a butyl acetate solvent (50 g) and monomeric vinyl stearate (10.0 g) in a 300-mL stainless steel autoclave, and a flange was sealed to create a vacuum in the autoclave. Tetrafluoroethylene (3.0 g) was charged, and the autoclave was placed in a shaking incubator at 60°C to initiate the reaction. Consumption of the monomer gas was confirmed by the decreasing polymerization pressure. At hour 2, the shaking was stopped, and the remaining gases were blown down to terminate the reaction.

After the reaction, the polymer solution was reprecipiated in a large amount of a methanol solution to purify the polymer. This gave a vinyl stearate/tetrafluoroethylene copolymer. Elemental analysis of fluorine revealed that the vinyl stearate/tetrafluoroethylene ratio of the copolymer was 68/32 (on a molar basis).

(Hydrolysis: synthesis of vinyl alcohol/tetrafluoroethylene copolymer)

A vinyl stearate/tetrafluoroethylene copolymer (vinyl stearate/tetrafluoroethylene = 68/32 (on a molar basis), 4.3 g) was dissolved in tetrahydrofuran (50 ml). To this solution, a 26% by mass solution of NaOH (water/methanol = 50/50 (% by mass), 5 g) was added and stirred. The reaction solution was analyzed by IR to track the hydrolysis reaction.

When the hydrolysis progressed 100%, the solution was concentrated, reprecipitated, washed, and dried to afford a substantially quantitative yield of a vinyl alcohol/tetrafluoroethylene copolymer. The alternating ratio was 25%.

A polymer solution containing 18.0% by mass of the vinyl alcohol/tetrafluoroethylene copolymer (vinyl alcohol/tetrafluoroethylene = 68/32 (on a molar basis), alternating ratio = 25%, saponification degree = 100%) and 82.0% by mass of dimethylacetamide was obtained by mixing the components at 25°C. This polymer solution was applied to a polyester nonwoven fabric (Unitika Ltd., 20557FLV) with an applicator (into a thickness of 203 $\mu$m), and immediately immersed in a water coagulation bath at 25°C for 5 minutes, and then in hot water at 92°C for 2 minutes. This caused the polymer component to flow out into the coagulation bath, and thus a uniform porous membrane could not be obtained.

[Example 4]

A polymer solution containing 9.0% by mass of the vinyl alcohol/tetrafluoroethylene copolymer (the same copolymer as that obtained in Example 1), 9.0% by mass of a vinylidene fluoride/tetrafluoroethylene copolymer (vinylidene fluoride/tetrafluoroethylene = 80/20 (mol%)), and 82.0% by mass of dimethylacetamide was obtained by mixing the components at 25°C. This polymer solution was applied to a polyester nonwoven fabric (Unitika Ltd., 20557FLV) with an applicator (into a thickness of 203 $\mu$m), and immediately immersed in a water coagulation bath at 25°C for 5 minutes, and then in hot water at 92°C for 2 minutes to give a flat porous membrane. The pure water permeability coefficient at 25°C was $2.3\times10^{-8}$ [m$^3$/m$^2$/Pa/s]. The contact angle (water) of the membrane was 77°, and water droplets penetrated into the membrane within 10 minutes.

[Comparative Example 4]

A polymer solution containing 18.0% by mass of a vinylidene fluoride/tetrafluoroethylene copolymer (vinylidene fluoride/tetrafluoroethylene = 80/20 (mol%)) and 82.0% by mass of dimethylacetamide was obtained by mixing the components at 25°C. This polymer solution was applied to a polyester nonwoven fabric (Unitika Ltd., 20557FLV) with an applicator (into a thickness of 203 $\mu$m), and immediately immersed in a water coagulation bath at 25°C for 5 minutes, and then in hot water at 92°C for 2 minutes to give a flat porous membrane. The pure water permeability coefficient at 25°C was $4.6\times10^{-10}$ [m$^3$/m$^2$/Pa/s]. An additional porous membrane was formed on a glass plate in the same manner. This membrane was found to have a contact angle (water) of 89°.

[Example 5]

A polymer solution containing 9.0% by mass of the vinyl alcohol/tetrafluoroethylene copolymer (the same copolymer as that obtained in Example 1), 9.0% by mass of polyvinylidene fluoride (Daikin Industries, Ltd.), and 82.0% by mass of dimethylacetamide was obtained by mixing the components at 25°C. This polymer solution was applied to a polyester nonwoven fabric (Unitika Ltd., 20557FLV) with an applicator (into a thickness of 203 $\mu$m), and immediately immersed in a water coagulation bath at 25°C for 5 minutes, and then in hot water at 92°C for 2 minutes to give a flat porous membrane. The pure water permeability coefficient at 25°C was $7.3\times10^{-9}$ [m$^3$/m$^2$/Pa/s]. The contact angle (water) of the membrane was 78°, and water droplets penetrated into the membrane within 10 minutes.

[Comparative Example 5]

A polymer solution containing 18.0% by mass of polyvinylidene fluoride (Daikin Industries, Ltd.) and 82.0% by mass of dimethylacetamide was obtained by mixing the components at 25°C. This polymer solution was applied to a polyester nonwoven fabric (Unitika Ltd., 20557FLV) with an applicator (into a thickness of 203 $\mu$m), and immediately immersed in a water coagulation bath at 25°C for 5 minutes, and then in hot water at 92°C for 2 minutes to give a flat porous membrane. The pure water permeability coefficient at 25°C was $5.9\times10^{-10}$ [m$^3$/m$^2$/Pa/s]. An additional porous membrane was formed on a glass plate in the same manner. This membrane was found to have a contact angle (water) of 112°.

INDUSTRIAL APPLICABILITY

The porous polymer membrane of the present invention can be used in various applications, and is suitable in particular for water treating applications.

**Claims**

1. A porous polymer membrane comprising a copolymer (A) containing vinyl alcohol units and tetrafluoroethylene units, wherein an alternating ratio of the vinyl alcohol units and the tetrafluoroethylene units is at least 30%.

2. The porous polymer membrane according to claim 1, wherein the copolymer (A) has a vinyl alcohol unit-to-tetrafluoroethylene unit ratio (vinyl alcohol units/tetrafluoroethylene units) of (25 to 75)/(75 to 25) on a molar basis.

3. The porous polymer membrane according to claim 1 or 2, further comprising a vinylidene fluoride resin in addition to the copolymer (A).

4. The porous polymer membrane according to claim 1, 2, or 3, wherein the porous polymer membrane is produced by either one or the combination of a non-solvent induced phase separation method and a thermally-induced phase separation method.

5. The porous polymer membrane according to claim 1, 2, 3, or 4, wherein the porous polymer membrane is a hollow fiber membrane.

6. The porous polymer membrane according to claim 1, 2, 3, 4, or 5, wherein the porous polymer membrane is for use in treating water.

## INTERNATIONAL SEARCH REPORT

| | International application No. |
|---|---|
| | PCT/JP2012/083690 |

A. CLASSIFICATION OF SUBJECT MATTER
See extra sheet.

According to International Patent Classification (IPC) or to both national classification and IPC

B. FIELDS SEARCHED

Minimum documentation searched (classification system followed by classification symbols)
C08J9/28, B01D69/08, B01D71/34, B01D71/36, B01D71/38, C02F1/44, C08F214/26, C08F216/06, C08L27/16, C08L27/18, C08L29/04, D01F6/00, D01F6/32, D01F6/34, D01F6/48, D01F6/50

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/126056 A1  (Asahi Glass Co., Ltd.), 13 October 2011 (13.10.2011), examples 1 to 4; paragraph [0060]; claims & US 2012/0296040 A1 examples 1 to 4; paragraph [0132]; claims & EP 2557097 A1          & CN 102812059 A | 1-6 |
| A | JP 5-261256 A  (Japan Gore-Tex Inc.), 12 October 1993 (12.10.1993), claims (Family: none) | 1-6 |
| A | JP 2-502832 A  (Allied-Signal Inc.), 06 September 1990 (06.09.1990), claims & WO 1989/004847 A1 claims | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 March, 2013 (29.03.13) | 09 April, 2013 (09.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/083690 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 58-92447 A  (Asahi Glass Co., Ltd.), 01 June 1983 (01.06.1983), claims (Family: none) | 1-6 |

Form PCT/ISA/210 (continuation of second sheet) (July 2009)

| INTERNATIONAL SEARCH REPORT | International application No. |
|---|---|
| | PCT/JP2012/083690 |

Continuation of A. CLASSIFICATION OF SUBJECT MATTER
  (International Patent Classification (IPC))

$C08J9/28$(2006.01)i, $B01D69/08$(2006.01)i, $B01D71/34$(2006.01)i,
$B01D71/36$(2006.01)i, $B01D71/38$(2006.01)i, $C02F1/44$(2006.01)i,
$C08F214/26$(2006.01)i, $C08F216/06$(2006.01)i, $C08L27/16$(2006.01)i,
$C08L27/18$(2006.01)i, $C08L29/04$(2006.01)i, $D01F6/00$(2006.01)i,
$D01F6/32$(2006.01)i, $D01F6/34$(2006.01)i, $D01F6/48$(2006.01)i,
$D01F6/50$(2006.01)i

(According to International Patent Classification (IPC) or to both national
classification and IPC)

Form PCT/ISA/210 (extra sheet) (July 2009)

EP 2 784 108 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05261256 A